# EUROPEAN PATENT SPECIFICATION

(11) **EP 2 101 971 B1**
(45) Date of publication and mention of the grant of the patent: **30.05.2012**
(21) Application number: 07826869.5
(22) Date of filing: 25.10.2007
(51) Int. Cl.: B28D 1/08, B28D 1/30

(54) **AUTOMATIC MACHINE FOR CUTTING AN OBJECT ALONG A NON-FLAT SECTION**
AUTOMAT ZUM SCHNEIDEN VON GEGENSTÄNDEN ENTLANG EINEM NICHT FLACHEN ABSCHNITT
MACHINE AUTOMATIQUE POUR COUPER UN OBJET LE LONG D'UNE SECTION NON PLATE

(30) Priority: 27.10.2006 IT TV20060194
(43) Date of publication of application: 23.09.2009
(73) Proprietor: Vio, Stefano, 30170 Mestre (VE) (IT)
(72) Inventor: Vio, Stefano, 30170 Mestre (VE) (IT)
(74) Representative: Dragotti, Gianfranco
(86) International application number: PCT/IB2007/054348
(87) International publication number: WO 2008/065556

(56) References cited:
- EP-A- 0 088 034
- DE-A1- 2 542 125
- DE-A1- 2 804 536
- US-A- 1 706 406
- US-A- 2 674 238
- US-A- 2 803 239

## Description

The present invention refers to a machine for cutting an object along a non-flat section according to the preamble of independent claim 1. Such a machine is known from US 1 706 406.

Although the object considered in the following description is a hollow semifinished product made of glass, the invention can also be used for cutting other objects, for example objects in metal, stone, timber, etc.

The cutting processes are carried out in order to divide objects into two or more parts, to remove parts of the material and to confer on them a shape not directly obtainable by moulding or casting. When the cut section is flat, processing does not pose particular problems. The situation is very different when the cut section is not flat, a case in which processing is of poor efficiency and/or very expensive because it can only be executed by particularly skilled personnel or only using sophisticated and expensive machines such as numerical control machines.

There are greater difficulties if the objects to be cut are made of materials which are fragile or in any way dangerous to handle, and/or the processing is a craft process, or anyway if the production batches are very small; and/or if skilled personnel is hard to find and/or expensive.

In the field of artistic objects in glass the semifinished products are generally produced by blowing, being therefore hollow and of thin section. In these cases, the practice is known of carrying out the process with tools consisting of motorised diamond discs which are moved manually, in one or more passes, along the perimeter lines of the cut section. However, by doing this the free and sharpened edges of the cut section are dangerous for the personnel engaged in the procedure.

Machines are known which carry out mechanical processes on objects, using the guided relative motion between the cutting tool and the object itself.

US patent 5363732 describes a machine tool which has a circular grindstone whose support is movable along two perpendicular horizontal axes. The grindstone defines the shape of the object to be machined by means of a pantograph mechanism made up of a cursor on the grindstone and a contoured profile.

US patent 3739679 refers to a machine tool for smoothing objects. A band-saw is movable along two perpendicular axes lying on a horizontal plane. The saw is inclinable with respect to the same horizontal plane by the movement of a pin, fixed to the saw, over a controlling template.

These machines are of complicated construction and are not usable for delicate procedures such as for objects in glass.

A principal object of the present invention is to provide a machine for cutting objects along non-flat cut sections. Another object is to create a machine with relatively simple and inexpensive means. These objects are achieved with a machine comprising the combination of features of independent claim 1. Preferred embodiments are disclosed by the dependent claims.

A machine of this kind allows variation of the position of the cutting wire over the object along a non-rectilinear trajectory, while maintaining however a very simple construction.

The machine includes a kinematic mechanism with a flat cam and follower, mounted so that the rectilinear relative movement between the support and the tool-carrying assembly produces in the articulation a variation in the relative inclination between the support and the tool-carrying assembly. This mechanically couples the support and the tool-carrying assembly, and allows the rectilinear movement to be exploited for guiding the oscillating movement (or vice versa). The reduction in the complexity of the machine is immediately noticeable.

Preferably, the machine includes a fixed frame on which are mounted the support and the tool-carrying assembly, and with respect to which they can move. The rectilinear movement can occur with the support, including for example a carriage horizontally slidable on a guide integral with the frame. To increase efficiency, the carriage can be moveable by a pneumatic or hydraulic driving mechanism or actuator. It can then be the tool-carrying assembly which oscillates, for example by mounting it pivoting with respect to the frame.

The cam-to-follower coupling may be used to "program" one of the two relative movements between support and tool-carrying assembly with respect to the other movement, thus obtaining in sum a desired cut section from a programmed travel of the cutting wire over the object.

The characteristics and advantages of the invention will be even clearer from the following description, provided by way of example, by reference to the attached drawings in which:
figs. 1A and 1B are two three-dimensional views of an object, respectively before and after a process of cutting by means of a machine as per the present invention;
fig. 2 is a three-dimensional overall view of a machine according to the present invention during the process of cutting the object shown in figs. 1A and 1B;
fig. 3 is a frontal view of the machine shown in fig. 2;
fig. 4 is a top view of the machine shown in fig. 2;
fig. 5 is a lateral view on an enlarged scale of a part of the machine shown in fig. 2;
fig, 6 is a three-dimensional view on an enlarged scale of a part of the machine shown in fig. 2.

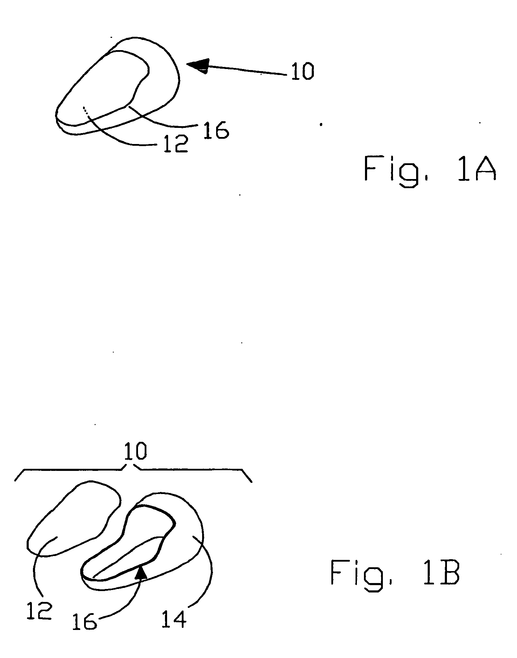

Fig. 1A shows a hollow object 10, made of blown glass and of ogival form, on whose outer surface is drawn a closed line 16 which constitutes the perimeter of a non-flat cutting plane. Along line 16, a first part 12 (marked by shading in fig. 1A) is removed from object 10, leaving a second part 14, as shown in fig. 1B.

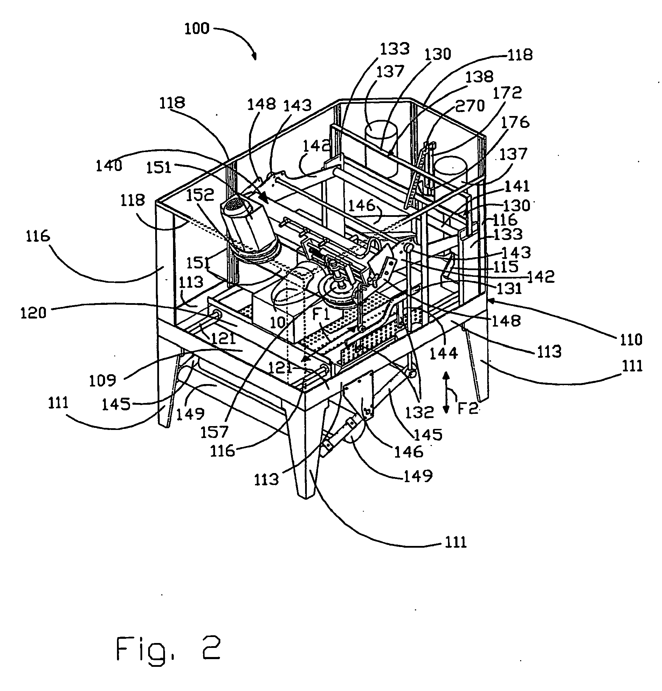

A machine 100 according to the invention is shown in figs. 2-6. It comprises a structural frame 110, having a horizontal base 109 resting on the ground by means of four legs 111, and including vertical columns 116 which support horizontal stiffening elements 118 (only some of which are shown). The columns 116 and elements 118 together constitute a protective containing cage. Protective sheets, transparent and/or sound-absorbing (not shown) can be inserted between columns 116, advantageously openable or removable to allow access to the inner parts of machine 100.

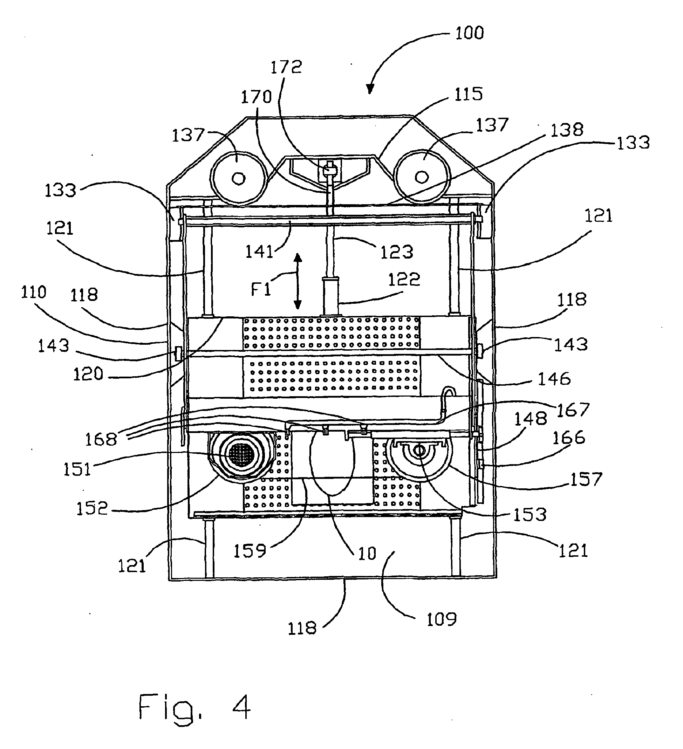

A carnage 120 is mounted on the frame 110, slidable on two horizontal lateral guides 121 parallel to two sides 113 of frame 110 itself and to its base 109, activated by a pneumatic or hydraulic cylinder 122 located on the plane of the mid-line of base 109. Cylinder 122 has a movable rod whose extremity 123 is fixed to one side 115 of the frame 110 by means of a joint. The carriage 120, on which the object 10 to be cut is placed, can therefore move longitudinally forwards (and backwards) over the base 109 (as indicated by the arrow F1 in figs. 2 and 4) until it reaches a stop element (not shown) whose position with respect to the base 109 is adjustable by known means (not shown). The carriage 120 is perforated to ensure the evacuation of the cooling water or other liquid used during the cutting process, as is more fully detailed below. On one side of the carriage 120 there is also fixed, on spacers 132, a template 131.

The frame 110 has two lateral shoulders 133 integral with it which, together with an upper beam 134, form a first portal 130.

A transverse rectilinear shaft 141 is pivotingly rotatable on portal 130 and acts as a fulcrum for a tool-carrying assembly 140. Assembly 140, which can oscillate around the axis of the shaft 141, includes a pair of arms 142 welded to the shaft 141 and supported by a crossbar 146 fixed between the heads 143 of two connecting-rods 144 which are movable vertically in the direction of the double arrow F2 shown in figs. 2, 3 and 5. The feet of connecting-rods 144 are hinged on respective oscillating rocker-arms 145, fixed to the frame 110 by brackets 139 and ballasted at their free end with weights 149, whose position is adjustable along rocker-arms 145 themselves.

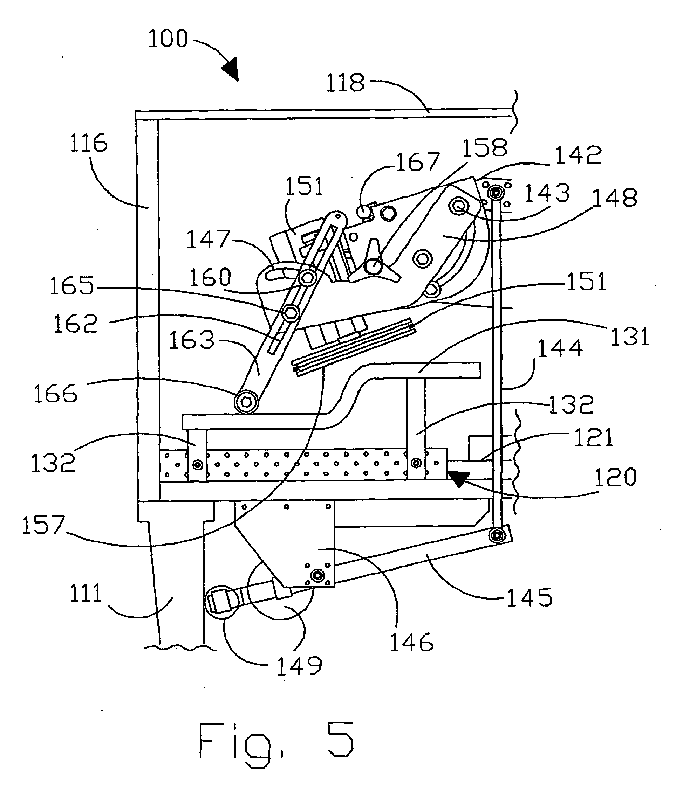

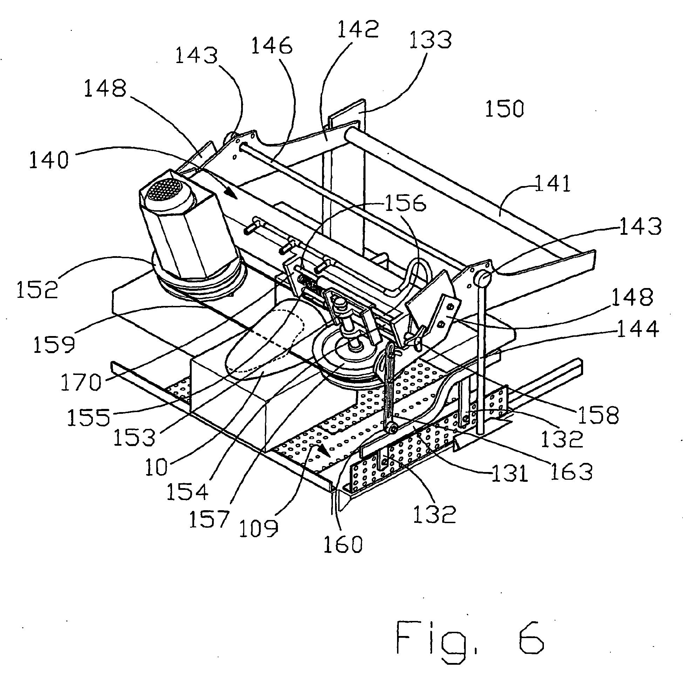

On one free end of arms 142, which project with respect to connecting-rods 144, is rigidly fixed a cantilever extension 148 having a slot 147 in the form of an arc of a circle with the concavity facing downwards (see figures 5 and 6). A bolt 160 is located in slot 147 and, when slackened, can slide within it. The head of bolt 160 retains an adjuster bar 163 by engaging a linear slot 162 formed in it, adjuster bar 163 being movably pivoted on a bolt 165 (screwed into extension 148) which engages slot 162 formed in it. At the end of bar 163 is mounted a roller 166 which can run on template 131 and follow its profile.

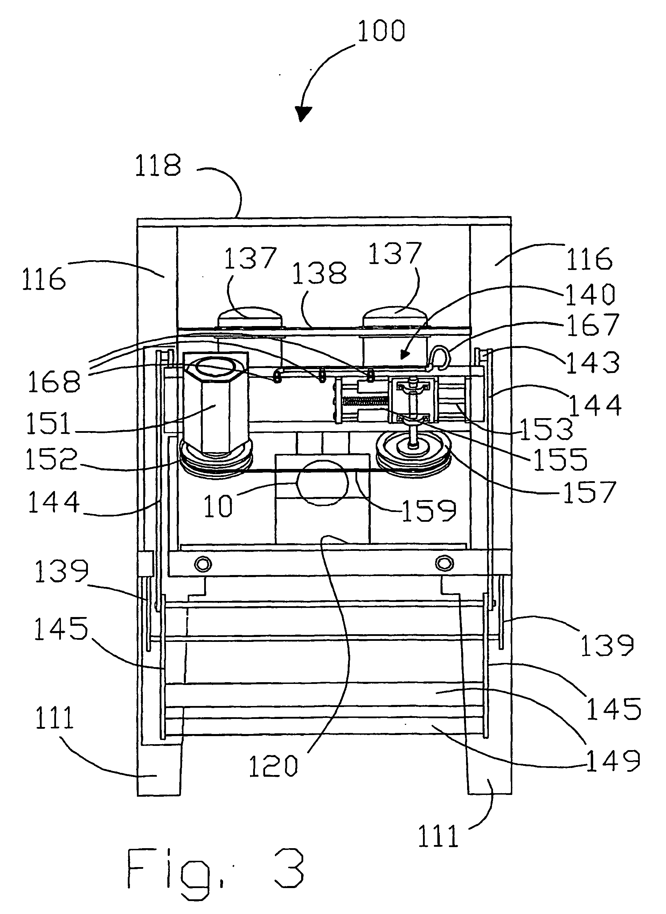

At the ends of arms 142 there is fixed a beam 150 which supports an electric motor 151, on whose output shaft a pulley 152 is mountedalong with an idler pulley 157 with its axis parallel to the axis of motor 151. On the two pulleys 152, 157 a diamond cutting wire 159 runs in a closed loop. Idler pulley 157 is mounted on a slider 153 (see figs. 3 and 6) which can slide on horizontal guides 156. The cutting wire 159 is kept taut by an expanding spring 155 located between the slider 153 and a threaded counter-plate 170, which functions as a thrust face for it. In this way spring 155 tends to push the two pulleys 152, 157 apart, thus keeping the wire 159 taut. Counter-plate 170 can be moved horizontally on guides 156 by rotating an endless screw 154 which is engaged in it and rotatable by means of a handwheel 158 with three spokes. Horizontal travel of the counter-plate 170 results in the slider 153 traversing with respect to beam 150, and consequently moving with respect to motor 151 whose position on the other hand is fixed, or coming closer to pulley 157, causing greater compression of spring 155. By this system it is possible to achieve optimum tension of wire 139 for each type of operation.

Between pulleys 157 and 152 are located the outlet nozzles 168 of a pipe 167 which carries cooling liquid to the workpiece 10 being processed below.

Shaft 141 also has an angular lever 270 welded to it whose free end is engaged in a closed fork 172 mounted on a piston 176 of a pneumatic cylinder, whose action is to vertically displace the fork 172 (direction F3 in fig. 2).

Piston 176 and cylinder 122, which brings about the movement of carriage 120, are part of the hydraulic system whose fluid reservoirs 137 are fixed to a C-section beam 138 positioned above portal 130. These reservoirs can also be absent, as the control of piston 176 can be effected by different actuating means and/or by means separate from machine 100.

Machine 100 works in the following manner.

At the beginning of the process, carriage 120, on which object 10 is positioned, is at one end of guides 121, roughly under reservoirs 137; roller 165 is consequently at the opposite end of profile 131.

The motor 151 is then activated to set the wire 159 in motion and the cooling liquid is pumped from the nozzles 168 over the piece 10.

The process continues with the actual cutting phase. The carriage 120, thrust by the cylinder 122, begins to move on the guides 121, bringing the workpiece 10 towards the wire 159. The carriage 120 then moves linearly under assembly 140 and the relative motion makes the roller 166 run over the template 131. As the roller 166 passes over the profile of template 131 - similarly to what happens with a cam and the corresponding follower - assembly 140 oscillates with respect to the frame 110 and with respect to the object 10 according to the said profile, and the wire 159 consequently oscillates in the same way. It may be understood therefore that the profile 131 serves to establish a vertical component of the cutting profile of wire 159 over workpiece 10, while a horizontal component is generated by the movement of the carriage 120.

Using different templates, or the same template but adjusting the inclination of bar 163 and/or the length of the part protruding from extension 148, different non-flat cut sections can be obtained, perfectly reproducible.

Advantageously, the weight of assembly 140 does not bear on template 131 because it is counterbalanced by the weight force of the ballast weights 149 which, when inverted by the rocker arms 145, is impressed on assembly 140 as a supporting force through connecting-rods 116.

Oscillation of assembly 140 determinates oscillation of angular lever 270 inside fork 172. During the advance of carriage 120 towards stop 125, in other words during the active phase of cutting, piston 176 is maximally extended in such a way that the end of lever 270 moves with free play and without impediment inside fork 172. In this phase of the process, therefore, piston 176 does not perform any function.

The cutting of object 10 finishes when carriage 120 has reached the end of its stroke against stop 125. At this point, piston 176 is retracted and fork 172 is lowered, carrying with it the end of lever 270 which is engaged there. Lever 270 itself thus makes shaft 141 rotate, which causes assembly 140 to be raised; in this way, wire 159 is brought up well clear of above object 10, which is now cut. Subsequently, carriage 120 is retracted to the starting position with the certainty that wire 159 will not encounter workpiece 10 again. Once carriage 120 has arrived at the starting position, the cut workpiece 10 is removed and another process can be begun on a new workpiece.

Functionally or conceptually equivalent modifications and variations are possible and foreseeable while still remaining within the scope of claim 1.

It is for example possible to modify the system for moving the carriage 120 and assembly 140, or to fix the element carrying the piece to be processed on a pivot in such a way that it oscillates, and position the tool-carrying assembly 140 on a carriage which travels in rectilinear motion. In that case also the position of template 131 (cam) and bar 163 (follower), respectively mounted on carriage 120 and on tool-carrying assembly 140, is reversed, achieving a process in conformity with what is described above.

## Claims

1. A machine (100) for cutting an object (10) along a non-flat cut section, comprising
- a support (120) for the object (10),
- a tool-carrying assembly (140) equipped with a cutting wire (159), and
- a mechanism (131, 163) for moving the support (120) and the tool-carrying assembly (140) with a predetermined relative movement whereby a corresponding path can be replicated for the cut section, comprising
- guiding means (121) adapted to allow rectilinear relative movement between the support (120) and the tool-carrying assembly (140), and
- an articulation (141) adapted to allow a variation of the relative inclination between the support (120) and the tool-carrying assembly (140),
the guiding means (121) and the articulation (141) being mounted so that the relative movement produced by the mechanism (131, 163) is the composition of a rectilinear and an oscillating movement,
whereby said mechanism (131, 163) comprises a kinematic mechanism with a template (131) used as a flat cam, and a follower (163), mounted on the tool-carrying assembly (140), so that the rectilinear relative movement between the support (120) and the tool-carrying assembly (140) produces in the articulation (141) a variation in the relative inclination of the latter two components,
**characterized in that**
the template (131) is mounted on the support (120) and **in that** the follower (163) is a bar of adjustable length and inclination and having mounted on its free end a roller (166) which runs on said template (131).

2. A machine (100) according to claim 1, comprising a fixed frame (110) on which are mounted the support (120) and the tool-carrying assembly (140).

3. A machine (100) according to claim 2, wherein the support comprises a carriage (120) which is horizontally slidable on a guide (121) integral with the frame (110).

4. A machine (100) according to claim 3, wherein the carriage (120) is movable by means of a pneumatic or hydraulic actuator (122).

5. A machine (100) according to one of claims 2 to 4, wherein the tool-carrying assembly (140) is mounted pivoting with respect to the frame (110).

6. A machine (100) according to any of claims 2 to 5, wherein the tool-carrying assembly (140) is coupled to a counterweight balancing system.

7. A machine (100) according to claim 6, wherein the balancing system comprises a rocker-arm (145), pivoting on the frame (110) so as to oscillate, on one of whose ends is adjustable the position of at least one counterweight (149), there being pivoted on the other end a rod (144) supporting the tool-carrying assembly (140).

8. A machine (100) according to one of claims 5 to 7, wherein the tool-carrying assembly (140) is mounted pivoting around a shaft (141) integral with the frame (110) between two lateral shoulders (133).

9. A machine (100) according to one of claims 5 to 8, comprising actuating means for rotating the tool-carrying assembly (140) around the shaft (141).

10. A machine (100) according to claim 9, wherein the actuating means comprise an angular lever (270) integral with the shaft (141) with its free end engaged in a closed fork (172) mounted on an actuating piston (176), coupled in such a way that the lowering of the piston (176) can lower the angular lever and, through the pivoting on the shaft (141), allow the raising of the tool-carrying assembly (140), or that the lever (270) can oscillate freely inside the closed fork (172) when the piston (176) is raised.

11. A machine (100) according to any of the preceding claims, wherein the tool-carrying assembly (140) comprises a first pulley (152) coupled to a motor (151) and a second pulley (157), around which pulleys the cutting wire (159) is fitted in, a loop.

12. A machine (100) according to claim 11, wherein the second pulley (157) is coupled slidably to the tool-carrying assembly (140) by means of a slider (153) movable on horizontal guides (156), in such a way that the position of said second pulley (157) is adjustable with respect to that of the first one.

13. A machine (100) according to claim 12, wherein on the slider (153) there is an elastic means (155) acting on the second pulley (157) and adapted to distance it from the first.

14. A machine (100) according to claim 13, comprising an endless screw (154) engaged in a threaded counter-plate, which is movable on the guides (156) and functions as a thrust face for the elastic element (155), the rotation of the screw (154) and the consequent axial movement of the counter-plate (170) bringing about a change in the position of the slider (153) on the guides (156) or a variation in the compression of the elastic element (155).

15. A machine (100) according to any of the preceding claims, wherein on the tool-carrying assembly (140) there is located at least one nozzle (168) of a pipe (167) carrying cooling liquid onto the workpiece (10) being processed and onto the cutting wire (159).

## Patentansprüche

1. Maschine (100) zum Schneiden eines Objekts (10) entlang einem nicht-flachen Schneideabschnitt, aufweisend
- einen Träger (120) für das Objekt (10),
- einen werkzeugtragenden Aufbau (140) der mit einem Schneidedraht (159) ausgestattet ist, und
- einen Mechanismus (131, 163) zum Bewegen des Trägers (120) und des werkzeugtragenden Aufbaus (140) mit einer vorbestimmten relativen Bewegung, wobei eine entsprechende Bahn für den Schneideabschnitt reproduziert werden kann, aufweisend
- ein Führungsmittel (121), das daran angepasst ist, eine geradlinige, relative Bewegung zwischen dem Träger (120) und dem werkzeugtragenden Aufbau (140) zu erlauben, und
- ein Gelenk (141), das daran angepasst ist, eine Veränderung der relativen Neigung zwischen dem Träger (120) und dem werkzeugtragenden Aufbau (140) zu erlauben,
wobei das Führungsmittel (121) und das Gelenk (141) derart befestigt sind, dass die relative Bewegung, die von dem Mechanismus (131, 163) erzeugt wird, die Zusammensetzung einer geradlinigen und einer schwingenden Bewegung ist,
wobei der Mechanismus (131, 163) einen kinematischen Mechanismus mit einer Schablone (131), die als flacher Kurventräger verwendet wird, sowie mit einer Kurvenrolle (163) aufweist, die auf dem werkzeugtragenden Aufbau (140) derart befestigt ist, dass die geradlinige relative Bewegung zwischen dem Träger (120) und dem werkzeugtragenden Aufbau (140) in dem Gelenk (141) eine Veränderung der relativen Neigung der beiden letztgenannten Komponenten erzeugt,
**dadurch gekennzeichnet, dass**
die Schablone (131) auf dem Träger (120) befestigt ist und dadurch, dass
die Kurvenrolle (163) eine Stange einstellbarer Länge und Neigung ist und an ihrem freien Ende eine Rolle (166) befestigt hat, die auf der Schablone (131) entlang läuft.

2. Maschine (100) gemäß Anspruch 1, die einen festen Rahmen (110) aufweist, auf dem der Träger (120) und der werkzeugtragende Aufbau (140) befestigt ist.

3. Maschine (100) gemäß Anspruch 2, wobei der Träger einen Werkzeugschlitten (120) aufweist, der horizontal auf einer mit dem Rahmen (110) integralen Führung (121) verschiebbar ist.

4. Maschine (100) gemäß Anspruch 3, wobei der Werkzeugschlitten (120) mittels eines pneumatischen oder hydraulischen Aktuators (122) bewegbar ist.

5. Maschine (100) gemäß einem der Ansprüche 2 bis 4, wobei der werkzeugtragende Aufbau (140) drehbar relativ zu dem Rahmen (110) befestigt ist.

6. Maschine (100) gemäß einem der Ansprüche 2 bis 5, wobei der werkzeugtragende Aufbau (140) an ein Gegengewichtausgleichssystem gekoppelt ist.

7. Maschine (100) gemäß Anspruch 6, wobei das Ausgleichssystem einen Schwingarm (145) aufweist, der so beweglich auf dem Rahmen (110) ist, dass er schwingen kann, wobei an einem seiner Enden die Position von wenigstens einem Gegengewicht (149) einstellbar ist und an dem anderen Ende eine Stange (144) gelenkig verbunden ist, die den werkzeugtragenden Aufbau (140) trägt.

8. Maschine (100) gemäß einem der Ansprüche 5 bis 7, wobei der werkzeugtragende Aufbau (140) beweglich um eine mit dem Rahmen (110) integrale Achse (141) zwischen zwei lateralen Ansätzen (133) befestigt ist.

9. Maschine (100) gemäß einem der Ansprüche 5 bis 8, aufweisend ein Betätigungsmittel zum Drehen des werkzeugtragenden Aufbaus (140) um die Achse (141).

10. Maschine (100) gemäß Anspruch 9, wobei das Befestigungsmittel einen mit der Achse (141) integralen winkeligen Hebel (270) aufweist, der mit seinem freien Ende in eine geschlossene Gabel (172) eingreift, die auf einem Betätigungskolben (176) befestigt ist, und derart gekoppelt ist, dass das Absenken des Kolbens (176) den winkeligen Hebel absenken kann und, durch das Drehen an der Achse (141) das Heben des werkzeugtragenden Aufbaus (140) gestatten kann, oder dass der Hebel (270) frei innerhalb der geschlossenen Gabel (172) schwingen kann, wenn der Kolben (176) gehoben ist.

11. Maschine (100) gemäß einem der vorhergehenden Ansprüche, wobei der werkzeugtragende Aufbau (140) eine erste Riemenscheibe (152), die an einen Motor (151) gekoppelt ist, sowie eine zweite Riemenscheibe (157) aufweist, wobei der Schneidedraht (159) in einer Schleife um die Riemenscheiben angebracht ist.

12. Maschine (100) gemäß Anspruch 11, wobei die zweite Riemenscheibe (157) verschiebbar an den werkzeugtragenden Aufbau (140) mittels eines Schiebers (153)gekoppelt ist, der auf horizontalen Führungen (156) derart bewegbar ist, dass die Position der zweiten Riemenscheibe (157) relativ zu der Position der ersten Riemenscheibe einstellbar ist.

13. Maschine (100) gemäß Anspruch 12, wobei sich auf dem Schieber (153) ein elastisches Mittel (155) befindet, das auf die zweite Riemenscheibe (157) einwirkt und dazu ausgelegt ist, diese von der ersten Riemenscheibe zu beabstanden.

14. Maschine (100) gemäß Anspruch 13, aufweisend eine Endlosschraube (154), die in eine mit Gewinde versehene Gegenplatte eingreift, welche auf den Führungen (156) bewegbar ist und als eine Druckseite für das elastische Element (155) funktioniert, wobei eine Drehung der Schraube (154) und die daraus folgende axiale Bewegung der Gegenplatte (170) eine Änderung in der Position des Schiebers (153) auf den Führungen (156) oder eine Veränderung in der Kompression des elastischen Elements (155) bewirkt.

15. Maschine (100) gemäß einem der vorhergehenden Ansprüche, wobei auf dem werkzeugtragenden Aufbau (140) wenigstens eine Düse (168) einer Leitung (167) angeordnet ist, die kühlende Flüssigkeit auf das Werkstück (10), welches bearbeitet wird, und auf den Schneidedraht (159) trägt.

## Revendications

1. Machine (100) pour couper un objet (10) le long d'une section de coupe non plate, comprenant :
un support (120) pour l'objet (10),
un ensemble porte-outil (140) équipé d'un fil de coupe (159), et
un mécanisme (131, 163) pour déplacer le support (120) et l'ensemble porte-outil (140) avec un mouvement relatif prédéterminé, moyennant quoi une trajectoire correspondante peut être reproduite pour la section de coupe, comprenant :
des moyens de guidage (121) adaptés pour permettre le mouvement relatif rectiligne entre le support (120) et l'ensemble porte-outil (140), et
une articulation (141) adaptée pour permettre une variation de l'inclinaison relative entre le support (120) et l'ensemble porte-outil (140),
les moyens de guidage (121) et l'articulation (141) étant montés de sorte que le mouvement relatif produit par le mécanisme (131, 163) est le mélange d'un mouvement rectiligne et d'un mouvement oscillant,
moyennant quoi ledit mécanisme (131, 163) comprend un mécanisme cinématique avec un gabarit (131) utilisé en tant que came plate, et un poussoir (163), monté sur l'ensemble porte-outil (140), de sorte que le mouvement relatif rectiligne entre le support (120) et l'ensemble porte-outil (140) produit dans l'articulation (141), une variation dans l'inclinaison relative des deux derniers composants,
**caractérisé en ce que** le gabarit (131) est monté sur le support (120) et **en ce que** le poussoir (163) est une barre de longueur et d'inclinaison ajustables et ayant, monté sur son extrémité libre, un rouleau (166) qui circule sur ledit gabarit (131).

2. Machine (100) selon la revendication 1, comprenant un châssis fixe (110) sur lequel sont montés le support (120) et l'ensemble porte-outil (140).

3. Machine (100) selon la revendication 2, dans laquelle le support comprend un chariot (120) qui peut coulisser horizontalement sur un guide (121) solidaire avec le châssis (110).

4. Machine (100) selon la revendication 3, dans laquelle le chariot (120) peut se déplacer au moyen d'un actionneur pneumatique ou hydraulique (122).

5. Machine (100) selon l'une quelconque des revendications 2 à 4, dans laquelle l'ensemble porte-outil (140) est monté de manière pivotante par rapport au châssis (110).

6. Machine (100) selon l'une quelconque des revendications 2 à 5, dans laquelle l'ensemble porte-outil (140) est couplé à un système d'équilibrage à contrepoids.

7. Machine (100) selon la revendication 6, dans laquelle le système d'équilibrage comprend un balancier (145) pivotant sur le châssis (110) pour osciller, sur l'une des extrémités duquel on peut régler la position d'au moins un contrepoids (149), sur l'autre extrémité on peut pivoter une tige (144) supportant l'ensemble porte-outil (140).

8. Machine (100) selon l'une quelconque des revendications 5 à 7, dans laquelle l'ensemble porte-outil (140) est monté de manière pivotante autour d'un arbre (141) solidaire avec le châssis (110) entre deux épaulements latéraux (133).

9. Machine (100) selon l'une quelconque des revendications 5 à 8, comprenant des moyens d'actionnement pour faire tourner l'ensemble porte-outil (140) autour de l'arbre (141).

10. Machine (100) selon la revendication 9, dans laquelle les moyens d'actionnement comprennent un levier angulaire (270) solidaire avec l'arbre (141) avec son extrémité libre mise en prise dans une fourche fermée (172) montée sur un piston d'actionnement (176) couplé de sorte que l'abaissement du piston (176) peut abaisser le levier angulaire, et par le biais du pivotement sur l'arbre (141), permettre la levée de l'ensemble porte-outil (140) ou de sorte que le levier (270) peut osciller librement à l'intérieur de la fourche fermée (172) lorsque le piston (176) est levé.

11. Machine (100) selon l'une quelconque des revendications précédentes, dans laquelle l'ensemble porte-outil (140) comprend une première poulie (152) couplée à un moteur (151) et une deuxième poulie (157), autour desquelles poulies, le fil de coupe (159) est monté en boucle.

12. Machine (100) selon la revendication 11, dans laquelle la deuxième poulie (157) est couplée de manière coulissante à l'ensemble porte-outil (140) au moyen d'une glissière (153) mobile sur des guides horizontaux (156), de sorte que la position de ladite deuxième poulie (157) est ajustable par rapport à celle de la première.

13. Machine (100) selon la revendication 12, dans laquelle sur la glissière (153), on trouve des moyens élastiques (155) agissant sur la deuxième poulie (157) et adaptés pour l'éloigner de la première.

14. Machine (100) selon la revendication 13, comprenant une vis sans fin (154) mise en prise dans une contre-plaque filetée qui est mobile sur les guides (156) et fonctionne comme une face de poussée pour l'élément élastique (155), la rotation de la vis (154) et le mouvement axial conséquent de la contre-plaque (170) occasionnant un changement de position de la glissière (153) sur les guides (156) ou une variation de la compression de l'élément élastique (155).

15. Machine (100) selon l'une quelconque des revendications précédentes, dans laquelle sur l'ensemble porte-outil (140), on trouve au moins une buse (168) d'un tuyau (167) transportant du liquide de refroidissement sur la pièce (10) à traiter et sur le fil de coupe (159).
